# EUROPEAN PATENT SPECIFICATION

(11) **EP 4 302 171 B1**
(45) Date of publication and mention of the grant of the patent: **09.04.2025**
(21) Application number: 22707195.8
(22) Date of filing: 25.02.2022
(51) Int. Cl.: G06F 3/01, G06T 19/00

(54) **DISPLAYING AN AGGREGATION OF DATA IN DEPENDENCE ON A DISTANCE TO A CLOSEST DEVICE IN AN IMAGE**
ANZEIGE EINER AGGREGATION VON DATEN IN ABHÄNGIGKEIT EINES ABSTANDS ZU EINER NÄCHSTLIEGENDEN VORRICHTUNG IN EINEM BILD
AFFICHAGE D'AGRÉGATION DE DONNÉES EN FONCTION D'UNE DISTANCE PAR RAPPORT À UN DISPOSITIF PLUS PROCHE DANS UNE IMAGE

(30) Priority: 01.03.2021 EP 21159847
(43) Date of publication of application: 10.01.2024
(73) Proprietor: Signify Holding B.V., 5656 AE Eindhoven (NL)
(72) Inventor: VAN DE SLUIS, Bartel Marinus, 5656 AE Eindhoven (NL); ALIAKSEYEU, Dzmitry Viktorovich, 5656 AE Eindhoven (NL); BORRA, Tobias, 5656 AE Eindhoven (NL)
(74) Representative: Verweij, Petronella Daniëlle
(86) International application number: PCT/EP2022/054775
(87) International publication number: WO 2022/184569

(56) References cited:
- CN-A- 109 089 097
- CN-A- 109 584 375
- US-A1- 2018 143 756
- US-A1- 2020 082 581

## Description

### FIELD OF THE INVENTION

The invention relates to a system for displaying data associated with at least one device, said data being displayed next to and/or overlaid on a view of a scene, said scene comprising said at least one device.

The invention further relates to a method of displaying data associated with at least one device, said data being displayed next to and/or overlaid on a view of a scene, said scene comprising said at least one device.

The invention also relates to a computer program product enabling a computer system to perform such a method.

### BACKGROUND OF THE INVENTION

Now that more and more devices in buildings are connected to a network, more and more devices are able to provide data to other devices. For example, settings of devices may be obtained remotely and more and more sensor data are becoming available. Not only is the number of standalone sensor devices increasing but also the number of other devices that incorporates a sensor. For instance, advanced lighting systems comprise multiple detection means to detect user presence, activities, room usage, environmental conditions (e.g. ambient light levels and/or temperature). As a result, such systems can gather huge amounts of data, which can be made available to users such as facility managers, store owners, cleaning staff, and hospitality managers.

Since more and more systems, such as these advanced lighting systems, gather huge amounts of data, it gets hard for users to select the data they need. Solutions are needed that make it easy for a user to access the data that the user needs. Augmented reality (AR) is a user-friendly technology for allowing a user to get information about real-world objects.

US 10,796,487 B2 discloses an augmented reality system which provides an augmented reality experience by augmenting the user's real-world view with contextual information. An AR application may determine that augmentation should be provided for one, more than one, or none of the mapped objects/nodes in the user's current field of view. In one embodiment, the AR application may determine that augmentation is not to be provided for mapped objects that are in the field of view but more than a threshold distance away from the user. The user can select a particular node by focusing on a node marker or by issuing a voice command.

However, US 10,796,487 B2 does not address the need for a user to get data that is not related to one individual device.

US2020/0082581 A1 discloses a system for displaying data, the system comprising a first and a second image capturing device, a transparent display and a processor. The system is configured to capture an image within the line of sight of the user viewing the transparent display, to identify multiple objects in the image and to either individually display object information of the objects or to group display object information of the objects.

### SUMMARY OF THE INVENTION

It is a first object of the invention to provide a system, which can use augmented reality to display data relating to devices in a camera's field of view on a level other than device level.

It is a second object of the invention to provide a method, which can use augmented reality to display data relating to devices in a camera's field of view on a level other than device level.

In a first aspect of the invention, a system for displaying data associated with at least one device, said data being displayed next to and/or overlaid on a view of a scene, said scene comprising said at least one device, comprises at least one input interface, at least one output interface, and at least one processor configured to obtain an image captured by a camera via said at least one input interface, said image capturing said scene and said at least one device, determine a distance from said camera to the closest device of said at least one device, select a device level or a group level based on said distance, and display said data by displaying, via said at least one output interface, data associated with only said closest device if said device level is selected or an aggregation of data associated with a group of devices if said group level is selected, said group of devices comprising said closest device.

This augmented reality system can both display data on a device level and on a group level. On the group level, an aggregation of data related to multiple devices is displayed. The level is selected based on the distance from the camera to the closest device in the field of view. By changing their positions and camera orientations, users can choose whether they want to get data relating an individual device or aggregated data related to a group of devices. Said displayed data may comprise sensor data associated with said closest device or associated with said group of devices, for example.

Said closest device may be a lighting device, for example. Said at least one processor may be configured to identify said closest device by obtaining an identifier communicated by said closest device via modulated light communication and obtain said data based on said identifier. Visible and/or non-visible light sources may be used to communicate identifiers. For example, identifiers may be transmitted using infra-red LiFi. Alternatively or additionally, said data may be obtained via modulated light communication.

Said at least one processor may be configured to identify said closest device by performing image recognition and obtaining an identifier of said closest device based on a result of said image recognition and obtain said data based on said identifier. For example, features may be extracted from a captured image and compared with features of known devices and/or features of current light effects rendered by known lighting devices. When a device or light effect of a lighting device is recognized in the image, the associated identifier may be obtained. For instance, a HueGo (a Philips Hue Go lamp) rendering a pink light setting may be recognized in the image.

The result of the image recognition may be combined with position information. For example, if a HueGo is recognized in the image, but one HueGo has been installed in the kitchen and another HueGo has been installed in the living room, then detecting that the system is present in the kitchen makes it possible to identify the HueGo in the kitchen. In case of many similar devices (e.g. luminaires in an office ceiling), the system needs more accurate position (and orientation) information and the locations of the devices need to be known more precisely (e.g. obtained from a Building Information Model).

Said at least one processor may be configured to select said device level if said distance is determined not to exceed a first distance threshold. Said at least one processor may be configured to select said device level or said group level further based on a quantity of devices captured in said image. For example, said at least one processor may be configured to determine a quantity of devices captured in said image and select said group level by default if said distance is determined to exceed said first distance threshold and said quantity is determined to be higher than one.

Said at least one processor may be configured to determine a second distance from said camera to the second closest device of said at least one device if at least one further device is captured in said image and select said device level or said group level further based on said second distance. In this case, the device level may be selected even if the distance to the closest device exceeds the first distance threshold.

Said at least one processor may be configured to calculate a difference between said distance and said second distance and select said device level if said difference is determined to exceed a difference threshold. In this case, if the distance to the closest device exceeds the first distance threshold but the second closest device is significantly farther away than the closest device, the device level and not the group level is selected. If the distance to the closest device exceeds the first distance threshold and the distances to the closest device and the second closest device do not differ too much, then a group level is selected. The group comprises at least the closest device and the second closest device, and typically all devices captured in the image. Thus, this (first) group level is selected when the user is believed to have intended to capture a group of devices in the image.

Said at least one processor may be configured to select said group level if said distance and second distance are determined to exceed said first distance threshold and not exceed a second distance threshold, said group further comprising said second closest device. Thus, this (first) group level is selected when the user is believed to have intended to capture a group of devices in the image, but without the need to determine a difference between distances. If the distance to the closest device exceeds the first distance threshold and the second distance to the second closest device exceeds the second distance threshold, then the device level is selected.

Said at least one processor may be configured to determine whether said closest device forms a group with at least one other device not captured in said image and select said group level if said distance is determined to exceed said first distance threshold, said second distance is determined to exceed said second distance threshold or no further device than said closest device is captured in said image, and said closest device is determined to form said group with said at least one other device, said group further comprising said at least one other device. Said at least one other device may have a same type as said closest device and/or be located in the same space as said closest device, for example.

It may not be necessary to select the device level if it was not possible to determine the second distance (because no further device is captured in the image) or to select the above-described first group level if the second distance exceeds the second distance threshold. Instead, if the distance to the closest device exceeds the first distance threshold and the closest device forms a group with at least one other device not captured in the image, then a second group level may be selected in these cases. For example, aggregated data related to all devices in the room may be displayed. In this case, the second group level is also referred to as room level.

The at least one processor may be configured not just to choose from one device level and one group level but to choose from a device level and multiple group levels. Whether the first group level or the second group level is chosen may depend, for example, on the quantity of devices captured in the image and/or the distances from the camera to at least some of these devices. The type of data displayed for the second group level may be different than for the first group level.

As described above, devices in the same group may have a same type and/or be located in the same space, but other grouping criteria may also be used. User-defined and system-defined grouping criteria may be distinguished. As an example of the former, a user may be able to group lights in rooms and zones where zones consist of a subset of lights from the room. For instance, a "TV zone" group could be a part of a "Living room" group. **In** this case, if a user points the camera at a few lighting devices that are part of both the Living room and the TV zone, the system could decide to show either zone or room level information. The room-based group might also include other connected devices that are assigned to it, e.g., a presence sensor and/or physical light controls.

System-defined groups may be static or dynamic. A static group may be determined, for example, based on a type of device (e.g., if two spotlights are captured in the view, the system might provide group information for only spotlights present in the area and not for other types of fixtures) or based on location (somewhat similar to user defined room-based grouping but using different heuristics of how lights are grouped; this is especially beneficial for smart buildings with multifunctional and open areas). A dynamic group may be determined in real-time based on the state of at least one of the devices captured in the image. For example, if the image captures two lighting devices that are switched on, then the system might provide information about all devices in the neighborhood that are also switched on.

Said at least one processor may be configured to determine whether said closest device forms a group with at least one other device not captured in said image and select said group level if said distance is determined to exceed a third distance threshold and said closest device is determined to form said group with said at least one other device, said group further comprising said at least one other device. Thus, the second group level may be selected even if the at least one processor is not configured to determine a second distance. The third distance threshold may be the same as or different from the first distance threshold.

For example, the first group level may be selected when the distance exceeds the first distance threshold but does not exceed the third distance threshold (on the condition that a further device is captured in the image) and the second group level may be selected when the distance exceeds both the first distance threshold and the third distance threshold (on the condition that the closest device forms a group with at least one other device not captured in the image).

Alternatively or additionally, a choice between the first group level and the second group level may be made in dependence on the quantity of devices captured in the image. For example, if the distance to the closest device exceeds the first distance threshold and more than a certain number of devices are captured in the image, the second group level (e.g. room level) may be selected. If the distance to the closest device exceeds the first distance threshold and not more than the certain number of devices are captured in the image, the first group level may be selected.

Said at least one processor may be configured to select said device level or said group level further based on a user preference if said distance is determined to exceed said third distance threshold, no further device than said closest device is determined to be captured in said image, and said closest device is determined to form said group with said at least one other device. If no further device than the closest device is captured in the image and the closest device is relatively far away, then some users may prefer it if the device level would be selected while other users may prefer it if the second group level, e.g. room level, would be selected (on the condition that the closest device forms a group with at least one other device not captured in the image). It may therefore be beneficial to let the user provide a user preference.

Said at least one processor may be configured to render an indication of said selected level. For example, clear feedback about the current level (device or group) may be provided. This feedback may be visual (e.g. displayed next to and/or overlaid on the view of the scene) or may be auditory (e.g. if during a data visualization, the user changes the AR device distance/perspective). The auditory feedback may indicate a change in selected level.

In a second aspect of the invention, a method of displaying data associated with at least one device, said data being displayed next to and/or overlaid on a view of a scene, said scene comprising said at least one device, comprises obtaining an image captured by a camera, said image capturing said scene and said at least one device, determining a distance from said camera to the closest device of said at least one device, selecting a device level or a group level based on said distance, and displaying said data by displaying data associated with only said closest device if said device level is selected or an aggregation of data associated with a group of devices if said group level is selected, said group of devices comprising said closest device. Said method may be performed by software running on a programmable device. This software may be provided as a computer program product.

Moreover, a computer program for carrying out the methods described herein, as well as a non-transitory computer readable storage-medium storing the computer program are provided. A computer program may, for example, be downloaded by or uploaded to an existing device or be stored upon manufacturing of these systems.

A non-transitory computer-readable storage medium stores at least one software code portion, the software code portion, when executed or processed by a computer, being configured to perform executable operations for displaying data associated with at least one device, said data being displayed next to and/or overlaid on a view of a scene, said scene comprising said at least one device.

The executable operations comprise obtaining an image captured by a camera, said image capturing said scene and said at least one device, determining a distance from said camera to the closest device of said at least one device, selecting a device level or a group level based on said distance, and displaying said data by displaying data associated with only said closest device if said device level is selected or an aggregation of data associated with a group of devices if said group level is selected, said group of devices comprising said closest device.

As will be appreciated by one skilled in the art, aspects of the present invention may be embodied as a device, a method or a computer program product. Accordingly, aspects of the present invention may take the form of an entirely hardware embodiment, an entirely software embodiment (including firmware, resident software, microcode, etc.) or an embodiment combining software and hardware aspects that may all generally be referred to herein as a "circuit", "module" or "system." Functions described in this disclosure may be implemented as an algorithm executed by a processor/microprocessor of a computer. Furthermore, aspects of the present invention may take the form of a computer program product embodied in one or more computer readable medium(s) having computer readable program code embodied, e.g., stored, thereon.

Any combination of one or more computer readable medium(s) may be utilized. The computer readable medium may be a computer readable signal medium or a computer readable storage medium. A computer readable storage medium may be, for example, but not limited to, an electronic, magnetic, optical, electromagnetic, infrared, or semiconductor system, apparatus, or device, or any suitable combination of the foregoing. More specific examples of a computer readable storage medium may include, but are not limited to, the following: an electrical connection having one or more wires, a portable computer diskette, a hard disk, a random access memory (RAM), a read-only memory (ROM), an erasable programmable read-only memory (EPROM or Flash memory), an optical fiber, a portable compact disc read-only memory (CD-ROM), an optical storage device, a magnetic storage device, or any suitable combination of the foregoing. **In** the context of the present invention, a computer readable storage medium may be any tangible medium that can contain, or store, a program for use by or in connection with an instruction execution system, apparatus, or device.

A computer readable signal medium may include a propagated data signal with computer readable program code embodied therein, for example, in baseband or as part of a carrier wave. Such a propagated signal may take any of a variety of forms, including, but not limited to, electro-magnetic, optical, or any suitable combination thereof. A computer readable signal medium may be any computer readable medium that is not a computer readable storage medium and that can communicate, propagate, or transport a program for use by or in connection with an instruction execution system, apparatus, or device.

Program code embodied on a computer readable medium may be transmitted using any appropriate medium, including but not limited to wireless, wireline, optical fiber, cable, RF, etc., or any suitable combination of the foregoing. Computer program code for carrying out operations for aspects of the present invention may be written in any combination of one or more programming languages, including an object oriented programming language such as Java(TM), Smalltalk, C++ or the like and conventional procedural programming languages, such as the "C" programming language or similar programming languages. The program code may execute entirely on the user's computer, partly on the user's computer, as a stand-alone software package, partly on the user's computer and partly on a remote computer, or entirely on the remote computer or server. In the latter scenario, the remote computer may be connected to the user's computer through any type of network, including a local area network (LAN) or a wide area network (WAN), or the connection may be made to an external computer (for example, through the Internet using an Internet Service Provider).

Aspects of the present invention are described below with reference to flowchart illustrations and/or block diagrams of methods, apparatus (systems), and computer program products according to embodiments of the present invention. It will be understood that each block of the flowchart illustrations and/or block diagrams, and combinations of blocks in the flowchart illustrations and/or block diagrams, can be implemented by computer program instructions. These computer program instructions may be provided to a processor, in particular a microprocessor or a central processing unit (CPU), of a general purpose computer, special purpose computer, or other programmable data processing apparatus to produce a machine, such that the instructions, which execute via the processor of the computer, other programmable data processing apparatus, or other devices create means for implementing the functions/acts specified in the flowchart and/or block diagram block or blocks.

These computer program instructions may also be stored in a computer readable medium that can direct a computer, other programmable data processing apparatus, or other devices to function in a particular manner, such that the instructions stored in the computer readable medium produce an article of manufacture including instructions which implement the function/act specified in the flowchart and/or block diagram block or blocks.

The computer program instructions may also be loaded onto a computer, other programmable data processing apparatus, or other devices to cause a series of operational steps to be performed on the computer, other programmable apparatus or other devices to produce a computer implemented process such that the instructions which execute on the computer or other programmable apparatus provide processes for implementing the functions/acts specified in the flowchart and/or block diagram block or blocks.

The flowchart and block diagrams in the figures illustrate the architecture, functionality, and operation of possible implementations of devices, methods and computer program products according to various embodiments of the present invention. In this regard, each block in the flowchart or block diagrams may represent a module, segment, or portion of code, which comprises one or more executable instructions for implementing the specified logical function(s).

It will also be noted that each block of the block diagrams and/or flowchart illustrations, and combinations of blocks in the block diagrams and/or flowchart illustrations, can be implemented by special purpose hardware-based systems that perform the specified functions or acts, or combinations of special purpose hardware and computer instructions.

### BRIEF DESCRIPTION OF THE DRAWINGS

These and other aspects of the invention are apparent from and will be further elucidated, by way of example, with reference to the drawings, in which:
Fig. 1 is a block diagram of a first embodiment of the system;
Fig. 2 is a block diagram of a second embodiment of the system;
Fig. 3 shows an example of a building in which the system may be used;
Fig. 4 is a flow diagram of a first embodiment of the method;
Fig. 5 is a flow diagram of a second embodiment of the method;
Fig. 6 is a flow diagram of a third embodiment of the method;
Fig. 7 shows a first example of an image which results in selection of a device level;
Fig. 8 shows a second example of an image which results in selection of a device level;
Fig. 9 is a flow diagram of a fourth embodiment of the method;
Fig. 10 is a flow diagram of a fifth embodiment of the method;
Fig. 11 shows a third example of an image which results in selection of a first group level;
Fig. 12 shows a fourth example of an image which results in selection of a second group level;
Fig. 13 is a flow diagram of a sixth embodiment of the method;
Fig. 14 is a flow diagram of a seventh embodiment of the method; and
Fig. 15 is a block diagram of an exemplary data processing system for performing the method of the invention.

Corresponding elements in the drawings are denoted by the same reference numeral.

### DETAILED DESCRIPTION OF THE EMBODIMENTS

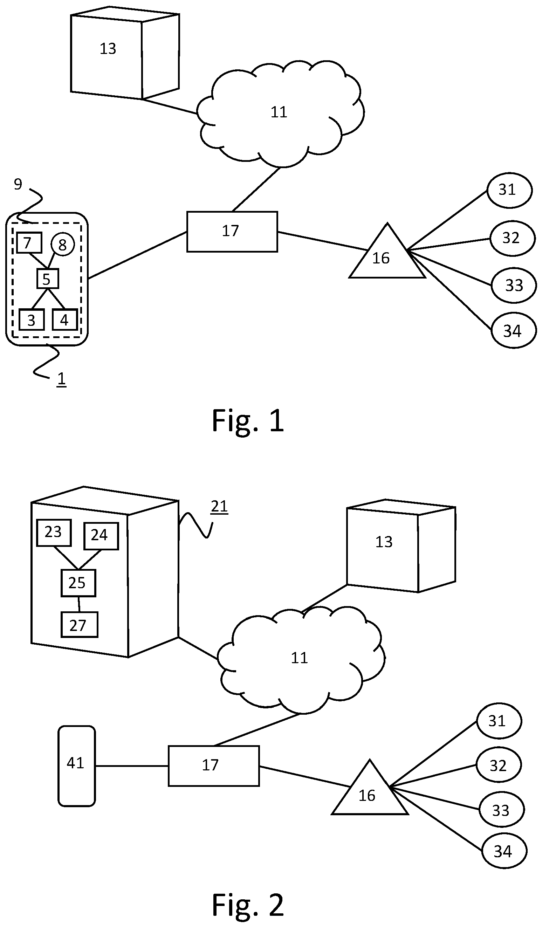

Fig. 1 shows a first embodiment of the system for displaying data associated with at least one device. The data are displayed next to and/or overlaid on a view of a scene which comprises the at least one device. In this first embodiment, the system is a mobile device 1. The mobile device 1 may be a mobile phone, a tablet, or augmented reality glasses, for example.

In the example of Fig. 1, a lighting system comprises a light controller 16 and lighting devices 31-34. Lighting devices 31-34 can be controlled via light controller 16, e.g. using Zigbee technology. Light controller 16 is connected to a wireless LAN access point 17, e.g. via Wi-Fi or Ethernet. The wireless LAN access point 17 is connected to the Internet 11. In an alternative embodiment, one or more of lighting devices 31-34 can be controlled directly, e.g. via Bluetooth, or via an Internet server 13 and the wireless LAN access point 17. The lighting devices 31-34 may be capable of receiving and transmitting Wi-Fi signals, for example. The Internet server 13 is also connected to the Internet 11.

The mobile device 1 comprises a transceiver 3, a transmitter 4, a processor 5, memory 7, a camera 8, and a (e.g. touchscreen) display 9. The processor 5 is configured to obtain an image captured by the camera 8 via an interface to the camera 8, determine a distance from the camera to the closest device of the one or more devices captured in the image, and select a device level or a group level based on the distance. For example, many of today's smartphones have depth-sensing capabilities. A distance towards a surface may be determined by combining motion-sensing data of the mobile device with image processing data from one or more cameras (e.g. of the mobile device).

In the example of Fig. 1, one or more of lighting devices 31-34 are captured in the image. The closest device is one of lighting devices 31-34. In another example, additionally or alternatively, one or more other types of devices are captured in the image and the closest device might be something other than a lighting device. In the embodiment of Fig. 1, the processor 5 is configured to identify the closest device by obtaining an identifier communicated by the closest device via visible light communication and obtain the data based on the identifier, e.g. from the device itself.

The processor 5 is configured to display, via the display 9, data associated with only the closest device if the device level is selected or an aggregation of data associated with a group of devices if the group level is selected. The group of devices comprises the closest device. Data associated with the closest device or associated with the group of devices may be obtained from the device(s) via the wireless LAN access point 17 or alternatively, via visible light communication. For example, the lighting devices 31-34 may be able to dynamically modulate the light output signal such that a large amount of data can be emitted.

In the embodiment of Fig. 1 or in an alternatively embodiment, input about a user profile input (e.g. user role, user ID) may be used to determine a data presentation which matches the user's authorization and interests.

In the embodiment of the mobile device 1 shown in Fig. 1, the mobile device 1 comprises one processor 5. In an alternative embodiment, the mobile device 1 comprises multiple processors. The processor 5 of the mobile device 1 may be a general-purpose processor, e.g. from ARM or Qualcomm or an application-specific processor. The processor 5 of the mobile device 1 may run an Android or iOS operating system for example. The camera 8 may comprise a CMOS or CCD sensor, for example. The display 9 may comprise an LCD or OLED display panel, for example. The processor 5 may use (touch screen) display 9 to provide a user interface, for example. The memory 7 may comprise one or more memory units. The memory 7 may comprise solid state memory, for example.

The receiver 3 and the transmitter 4 may use one or more wireless communication technologies, e.g. Wi-Fi (IEEE 802.11) for communicating with the wireless LAN access point 17, for example. In an alternative embodiment, multiple receivers and/or multiple transmitters are used instead of a single receiver and a single transmitter. In the embodiment shown in Fig. 1, a separate receiver and a separate transmitter are used. In an alternative embodiment, the receiver 3 and the transmitter 4 are combined into a transceiver. The mobile device 1 may comprise other components typical for a mobile device such as a battery and a power connector. The invention may be implemented using a computer program running on one or more processors.

Fig. 2 shows a second embodiment of the system for displaying data associated with at least one device. The data are displayed next to and/or overlaid on a view of a scene which comprises the at least one device. In this second embodiment, the system is a computer 21. The computer 21 is connected to the Internet 11 and acts as a server. The computer 21 may be operated by a lighting company, for example. In the embodiment of Fig. 2, the computer 21 is able to control the lighting devices 31-34 via the wireless LAN access point 17 and the light controller 16.

The computer 21 comprises a receiver 23, a transmitter 24, a processor 25, and storage means 27. The processor 25 is configured to obtain an image captured by a camera of a mobile device 41 via receiver 23, determine a distance from the camera to the closest device of the one or more devices captured in the image, and select a device level or a group level based on the distance. The processor 25 may be able to determine the distance based solely on the image, based on the image and on other data received from the mobile device 41 or from another system, or based solely on other data.

The processor 25 is configured to display data associated with only the closest device if the device level is selected or an aggregation of data associated with a group of devices if the group level is selected. The group of devices comprises the closest device. The processor 25 may be configured to display the data by transmitting the data to the mobile device 41 via the transmitter 24 and causing the mobile device 41 to display the data, e.g. via an app running on the mobile device 41.

In the embodiment of the computer 21 shown in Fig. 2, the computer 21 comprises one processor 25. In an alternative embodiment, the computer 21 comprises multiple processors. The processor 25 of the computer 21 may be a general-purpose processor, e.g. from Intel or AMD, or an application-specific processor. The processor 25 of the computer 21 may run a Windows or Unix-based operating system for example. The storage means 27 may comprise one or more memory units. The storage means 27 may comprise one or more hard disks and/or solid-state memory, for example. The storage means 27 may be used to store an operating system, applications and application data, for example.

The receiver 23 and the transmitter 24 may use one or more wired and/or wireless communication technologies such as Ethernet and/or Wi-Fi (IEEE 802.11) to communicate with devices on the Internet 11, for example. In an alternative embodiment, multiple receivers and/or multiple transmitters are used instead of a single receiver and a single transmitter. In the embodiment shown in Fig. 2, a separate receiver and a separate transmitter are used. In an alternative embodiment, the receiver 23 and the transmitter 24 are combined into a transceiver. The computer 21 may comprise other components typical for a computer such as a power connector. The invention may be implemented using a computer program running on one or more processors.

In the embodiment of Fig. 2, the computer 21 transmits data to the lighting devices 31-34 via light controller 16. In an alternative embodiment, the lighting devices 31-34 are able to receive data from the computer 21 which have not passed through a light controller.

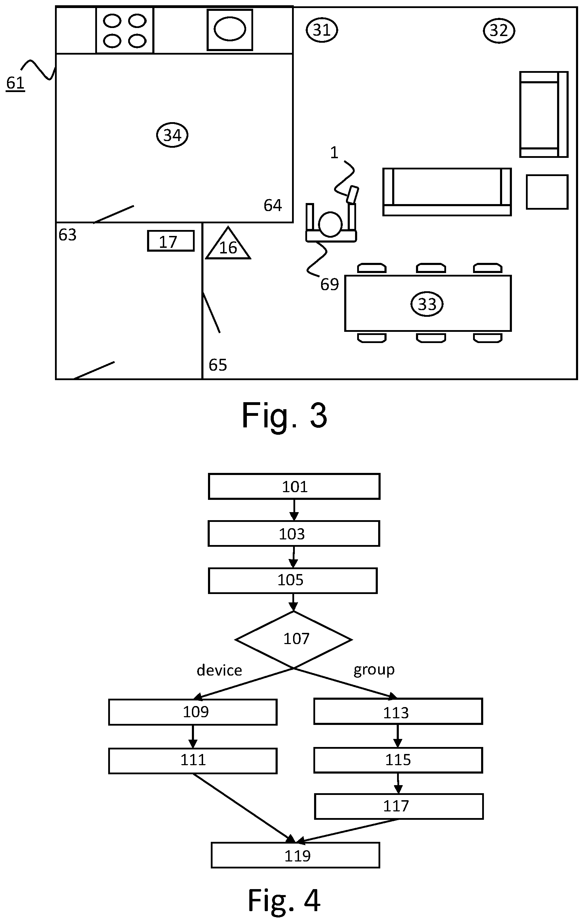

Fig. 3 shows an example of a building in which the system of Fig. 1 or Fig. 2 may be used. In the example of Fig. 3, a user 69 uses mobile device 1 of Fig. 1. The building 61 comprises a hallway 63, a kitchen 64, and a living room 65. Wireless LAN access point 17 has been installed in the hallway 63. Lighting devices 31-33 and light controller 16 have been installed in the living room 65, and lighting device 34 has been installed in the kitchen 64. In the example of Fig. 3, the camera of the mobile device 1 captures an image of the lighting devices 31 and 32.

A first embodiment of the method of displaying data associated with at least one device is shown in Fig. 4. The data is displayed next to and/or overlaid on a view of a scene which comprises the at least one device. The method may be performed by the mobile device 1 of Fig. 1 or the cloud computer 21 of Fig. 2, for example.

A step 101 comprises obtaining an image captured by a camera. The image captures the scene and the at least one device. The camera is typically embedded in a mobile device. The camera may be embedded in a mobile phone or in augmented reality glasses, for example. A step 103 comprises determining a distance from the camera to the closest device captured in the image. This determination may be performed by using a dedicated time-of-flight distance sensor integrated into the mobile device which comprises the camera, or by combining motion-sensing data from the inertial sensor of the mobile device with data obtained by analyzing image(s) from the camera and/or from another camera, for example.

Step 103 may comprise analyzing the image obtained in step 101. If the closest device is a lighting device and this lighting device is generating a high lumen output, the distance may be determined towards surfaces very close to the light source. Another approach is to determine the distance to the closest device based on the relative signal strength of the closest device's RF signal (e.g. WiFi or Bluetooth) as detected by the mobile device which comprises the camera.

A step 105 comprises selecting a device level or a group level based on the distance determined in step 103. A step 107 comprise determining whether a device level or a group level was selected in step 105 and performing a step 109 if a device level was selected and performing step 113 if a group level was selected.

Step 109 comprises identifying the closest device. Step 109 may comprise identifying the closest device by obtaining an identifier communicated by the closest device via modulated light communication, e.g. visible light communication (VLC). For example, the mobile device may use its camera to detect the identifier as emitted by the VLC (lighting) device or use a (directional) light sensor which is able to detect the VLC signal. Step 111 comprises obtaining data associated with only the closest device. Step 111 comprises obtaining the data based on the identifier obtained in step 109. The data may be sensor data, for example. If the closest device is a lighting device, the data may be lighting usage data or sensor data from a sensor embedded in, connected to, or associated with the lighting device, for example.

Step 113 comprises identifying devices in a group of devices. The group of devices comprises the closest device. Step 113 may comprise identifying the closest device by obtaining an identifier communicated by the closest device via visible light communication, as described in relation to step 109, and identifying the other devices in the group based on the identifier of the closest device. Alternatively, step 113 may comprise identifying the devices in the group by obtaining the identifiers communicated by these devices via visible light communication.

Step 115 comprises obtaining data associated with the group of devices, e.g. based on the identifiers obtained in step 113. Step 117 comprises aggregating the data obtained in step 115. The data may be sensor data or lighting usage data, for example. In step 111 and/or step 115, a subset of data available for a certain device or group of device may be obtained. A user may be able to select which subset of data should be obtained for a certain device, for a certain group of devices, or for a level in general.

A step 119 is performed after step 111 or step 117 has been performed. Step 119 comprises displaying the data obtained in step 111 or determined in step 117 next to and/or overlaid on a view of the scene. Step 119 comprises displaying data associated with only the closest device if the device level is selected in step 105 or an aggregation of data associated with a group of devices if the group level is selected in step 105. For instance, when distant to a lamp, the data could show most frequently used light scenes in the room, whereas when close to a lamp, the data shown could indicate most frequently used lamp settings.

As mentioned above, the data is displayed next to and/or overlaid on a view of a scene which comprises at least the closest device. The data may be displayed next and/or overlaid on the image obtained in step 101 or may be displayed using augmented reality glasses, for example. In the latter case, the image obtained in 101 does not need to be displayed.

In step 119, a subset of the data obtained in step 111 and/or step 115 may be displayed. A user may be able to select which subset of the obtained data should be displayed for a certain device, for a certain group of devices, or for a level in general. A user may be able to choose from pre-defined data dashboards and/or from personalized data dashboards. A user may be able to switch between dashboard by changing the orientation of his mobile device. The system performing the method may record which dashboards users select and use the same dashboard that the user selected previously or use a dashboard that was selected most often by users in general for a certain device, for a certain group of devices, or for a level in general.

In an advanced implementation, user information (e.g. user role, user ID) is used to select a dashboard which matches the user's authorization and/or interests. As a result, different types of users will each see different types of data presentations for the same device or group of devices, showing relevant data tailored to the individual users (e.g. based on role, authorization, preferences, interests). The personalized data dashboards may also be selected by a learning system which has monitored individual data presentation interests in various situations over time.

In addition to the (aggregated) data, the distance determined in step 103 or an indication thereof may be displayed as well. This may be done in absolute metrics, e.g. by showing a distance slider, or by indicating the determined level of proximity, e.g. whether the mobile device is remote, near or close to the closest device.

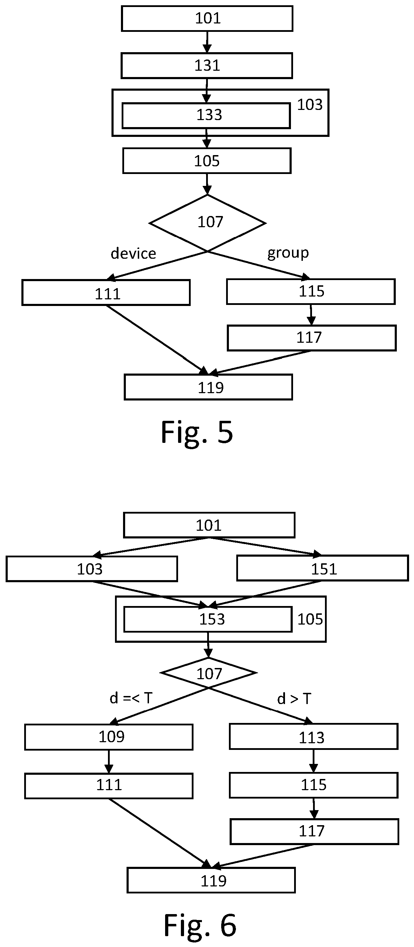

A second embodiment of the method of displaying data associated with at least one device is shown in Fig. 5. This second embodiment is a variation on the embodiment of Fig. 4. In this second embodiment, steps 131 and 133 are performed instead of steps 109 and 113 of Fig. 5. Step 133 is an implementation of step 103 and step 131 is performed between steps 101 and 133.

Step 131 comprises identifying the devices in the image. Step 131 may comprise identifying the devices in the image by obtaining identifiers communicated by the devices via visible light communication, e.g. if the devices are lighting devices. Step 133 comprises determining distances from the camera to each of the devices in the image.

Step 111 comprises obtaining data associated with only the closest device based on the identifier obtained in step 131. Step 115 comprises obtaining data associated with the group of devices, e.g. based on one or more of the identifiers obtained in step 131.

A third embodiment of the method of displaying data associated with at least one device is shown in Fig. 6. This third embodiment is a variation on the embodiment of Fig. 4. In this third embodiment, step 105 is implemented by a step 153 and a step 151 is performed between steps 101 and 153. Step 151 comprises determining a quantity of devices captured in the image obtained in step 101.

Step 153 comprises selecting the device level if the distance determined in step 103 does not exceed a first distance threshold T and selecting the group level if the distance determined in step 103 exceeds the first distance threshold T and the quantity determined in step 151 is higher than one. If the distance determined in step 103 exceeds the first distance threshold T and the quantity determined in step 151 is one, then the device level may be selected in step 153, or alternatively, either the device level or a second group level may then be selected in step 153. The latter may be user-configurable or defined by the implementor, for example.

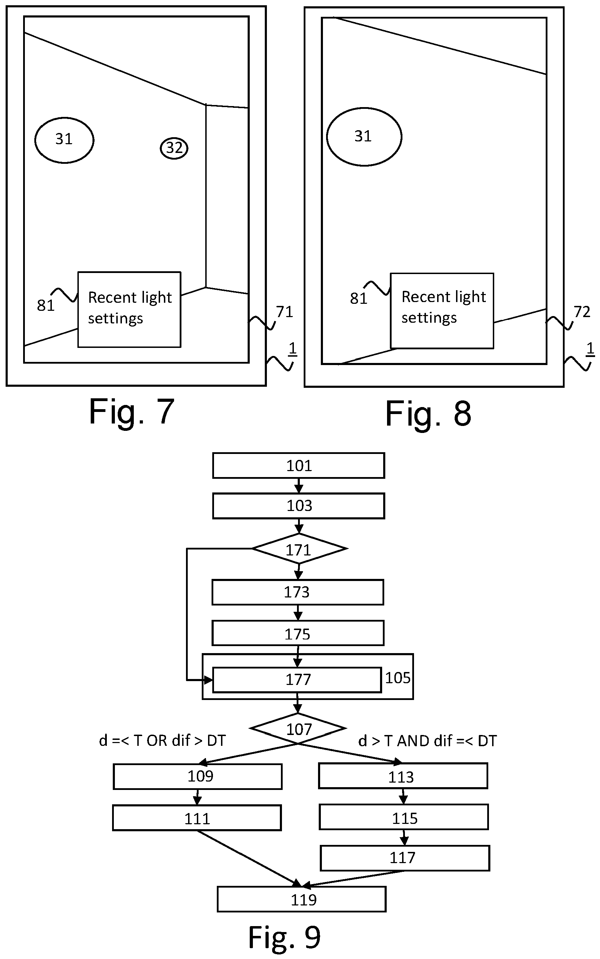

Figs. 7 and 8 show examples in which the distance from the camera to the closest device captured in the image does not exceed the first distance threshold T and the device level is therefore selected. In the example of Fig. 7, a mobile device 1 displays an image 71 which captures two lighting devices 31 and 32. In the example of Fig. 8, the mobile device 1 displays an image 72 which captures lighting device 31. In both examples, lighting device 31 is the closest device. As the device level has been selected, data 81 associated with the (closest) lighting device 31 are displayed. Data 81 comprise recent light settings associated with the lighting device 31.

A fourth embodiment of the method of displaying data associated with at least one device is shown in Fig. 9. This fourth embodiment is a variation on the embodiment of Fig. 4. **In** this fourth embodiment, step 105 is implemented by a step 177 and steps 171, 173, and 175 have been added between steps 103 and 177.

Step 171 comprises determining whether at least one further device is captured in the image and if so, performing steps 173 and 175. Otherwise, steps 173 and 175 are skipped. Step 173 comprises determining a second distance from the camera to the second closest device of devices captured in the obtained image. Step 175 comprises calculating a difference between the distance determined in step 103 and the second distance determined in step 173.

Step 177 comprises selecting the device level if the distance determined in step 103 does not exceed a first distance threshold or if the difference determined in step 175 exceeds a difference threshold. Step 177 comprises selecting the group level if the distance determined in step 103 exceeds the first distance threshold and the difference determined in step 175 does not exceed the difference threshold.

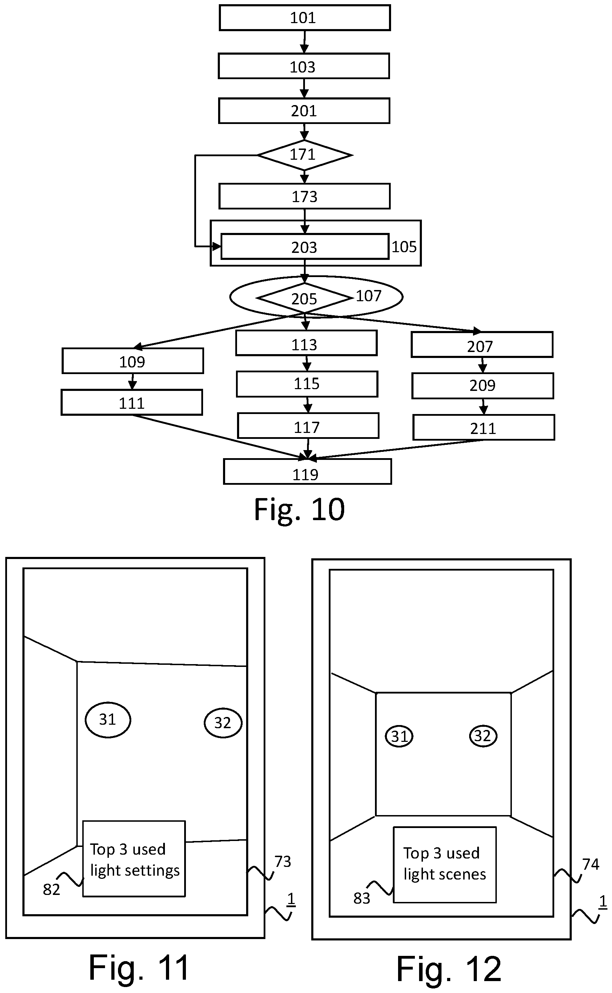

A fifth embodiment of the method of displaying data associated with at least one device is shown in Fig. 10. This fifth embodiment is a variation on the embodiment of Fig. 4. **In** this fifth embodiment, a step 201 is performed after step 103, step 105 is implemented by a step 203, steps 171 and 173 have been added between steps 201 and 203, step 107 is implemented by a step 205, and steps 207, 209, and 211 have been added between steps 205 and 119.

Step 201 comprises determining whether the closest device forms a group with at least one other device not captured in the image, e.g. with one or more devices which have a same type as the closest device or with one or more devices located in the same space as the closest device.

Step 171 comprises determining whether at least one further device, i.e, other than the closest device, is captured in the image and if so, performing step 173. Otherwise, step 173 is skipped. Step 173 comprises determining a second distance from the camera to the second closest device captured in the image.

Step 203 comprises selecting the device level if the distance determined in step 103 does not exceed a first distance threshold. Step 203 comprises selecting the device level if the distance determined in step 103 exceeds the first distance threshold, it was determined in step 201 that the closest device does not form a group with at least one other device, and step 173 was skipped.

Step 203 comprises selecting a first group level if the distance determined in step 103 and the second distance determined in step 173 exceed the first distance threshold and if either a) these two distances do not exceed a second distance threshold or b) it was determined in step 201 that the closest device does not form a group with at least one other device.

Step 203 comprises selecting a second group level if the distance determined in step 103 exceeds the first distance threshold, it was determined in step 201 that the closest device forms a group with at least one other device, and if either a) the second distance determined in step 173 exceeds the second distance threshold or b) step 173 was skipped.

Step 205 comprises determining whether the device level, the first group level, or the second group level was selected in step 203 and performing step 109 if the device level was selected, performing step 113 if the first group level was selected, and performing step 207 if the second group level was selected. Steps 209 and 211 are performed after step 207. Steps 207, 209, and 211 are similar to steps 113, 115, and 117, respectively. However, in step 115 data is obtained associated with a first group of devices which comprises at least the closest device and the second closest device, typically all devices captured in the image. In step 209, data is obtained associated with a second group of devices which comprises the closest device and the at least one other device not captured in the image.

Figs. 11 and 12 show examples in which the distance from the camera to the closest device captured in the image exceeds the first distance threshold. In these examples, the mobile device 1 displays images 73 and 74 which capture two lighting devices 31 and 32. In the example of Fig. 11, lighting device 31 is the closest device and lighting device 32 is the second closest device.

In the example of Fig. 11, the distance from the camera to the second closest lighting device does not exceed the second distance threshold and as a result, the first group level is selected. As the first group level has been selected, data 82 associated with the group of lighting devices captured in the image, i.e. lighting devices 31 and 32, are displayed. Data 82 comprise the top three of light settings used on any of these two lighting devices.

In the example of Fig. 12, the distances from the camera to lighting devices 31 and 32 are the same. The closest lighting device may be chosen arbitrarily from lighting devices 31 and 32. The second closest lighting device is the lighting device not chosen as closest lighting device. In the example of Fig. 12, the distance from the camera to the closest device captured in the image and the second distance from the camera to the second closest device captured in the image both exceed the first distance threshold and the second distance threshold.

Since the lighting devices 31 and 32 form a group with a lighting device 33, which is located in the same room but not captured in the image 74, the second group level is selected. As the first group level has been selected, data 83 associated with the group of lighting devices in the same room, i.e. lighting devices 31-33, are displayed. Data 83 comprise the top three of light scenes involving one or more of these three lighting devices.

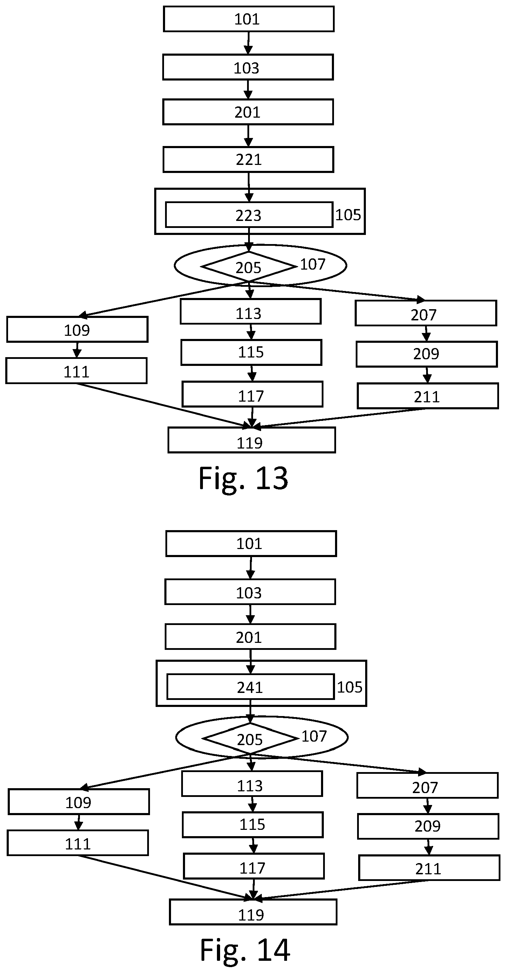

A sixth embodiment of the method of displaying data associated with at least one device is shown in Fig. 13. This sixth embodiment is a variation on the embodiment of Fig. 4. **In** this sixth embodiment, step 201 of Fig. 10 and a step 221 are performed after step 103, step 105 is implemented by a step 223, step 107 is implemented by step 205 of Fig.10, and steps 207, 209, and 211 of Fig. 10 have been added between steps 205 and 119.

Step 201 comprises determining whether the closest device forms a group with at least one other device not captured in the image, e.g. with one or more devices which have a same type as the closest device or with one or more devices located in the same space as the closest device. Step 221 comprises determining whether at least one further device, i.e, other than the closest device, is captured in the image. This step is somewhat similar to step 171 of Fig. 10.

Step 223 comprises selecting the device level if the distance determined in step 103 does not exceed a first distance threshold. Step 223 comprises selecting the device level if the distance determined in step 103 exceeds the first distance threshold, it was determined in step 201 that the closest device does not form a group with the at least one other device, and it was determined in step 221 that no further device is captured in the image.

Step 223 comprises selecting a first group level if the distance determined in step 103 exceeds the first distance threshold and it was determined in step 221 that a further device other than the closest device is captured in the image. Step 223 comprises selecting the device level or a second group level based on a user preference if the distance determined in step 103 exceeds the further distance threshold, it was determined in step 201 that the closest device forms a group with the at least one other device, and it was determined in step 221 that no further device than the closest device is captured in the image. After step 223, steps 109-119, and 205-211 of Fig. 10 are performed.

A seventh embodiment of the method of displaying data associated with at least one device is shown in Fig. 14. This seventh embodiment is a variation on the embodiment of Fig. 4. In this seventh embodiment, step 201 of Fig. 10 is performed after step 103, step 105 is implemented by a step 241, step 107 is implemented by step 205 of Fig. 10, and steps 207, 209, and 211 of Fig. 10 have been added between steps 205 and 119.

Step 201 comprises determining whether the closest device forms a group with at least one other device not captured in the image, e.g. with one or more devices which have a same type as the closest device or with one or more devices located in the same space as the closest device.

Step 241 comprises selecting the device level if the distance determined in step 103 does not exceed a first distance threshold. Step 241 comprises selecting a first group level if the distance determined in step 103 exceeds the first distance threshold and it was determined in step 201 that the closest device does not form a group with at least one other device. Step 241 comprises selecting a second group level if the distance determined in step 103 exceeds the first distance threshold and it was determined in step 201 that the closest device forms a group with at least one other device. After step 241, steps 109-119, and 205-211 of Fig. 10 are performed.

The embodiments of Figs. 4 to 6, 9 to 10, and 13 to 14 differ from each other in multiple aspects, i.e. multiple steps have been added or replaced. In variations on these embodiments, only a subset of these steps is added or replaced and/or one or more steps is omitted. For example, steps 131 and 133 of Fig. 5 may be added to, and steps 109 and 113 may be omitted from, the embodiments of Figs. 6, 9 to 10, and 13 to 14. In the embodiments of Fig. 10 and Figs. 13 and 14, step 207 may be omitted for the same reason as steps 109 and 113.

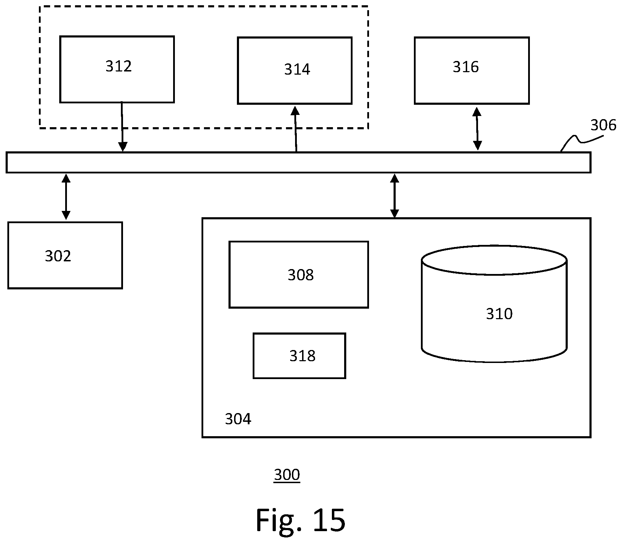

Fig. 15 depicts a block diagram illustrating an exemplary data processing system that may perform the method as described with reference to Figs. 4 to 6, 9 to 10, and 13 to 14.

As shown in Fig. 15, the data processing system 300 may include at least one processor 302 coupled to memory elements 304 through a system bus 306. As such, the data processing system may store program code within memory elements 304. Further, the processor 302 may execute the program code accessed from the memory elements 304 via a system bus 306. In one aspect, the data processing system may be implemented as a computer that is suitable for storing and/or executing program code. It should be appreciated, however, that the data processing system 300 may be implemented in the form of any system including a processor and a memory that is capable of performing the functions described within this specification. The data processing system may be an Internet/cloud server, for example.

The memory elements 304 may include one or more physical memory devices such as, for example, local memory 308 and one or more bulk storage devices 310. The local memory may refer to random access memory or other non-persistent memory device(s) generally used during actual execution of the program code. A bulk storage device may be implemented as a hard drive or other persistent data storage device. The processing system 300 may also include one or more cache memories (not shown) that provide temporary storage of at least some program code in order to reduce the quantity of times program code must be retrieved from the bulk storage device 310 during execution. The processing system 300 may also be able to use memory elements of another processing system, e.g. if the processing system 300 is part of a cloud-computing platform.

Input/output (I/O) devices depicted as an input device 312 and an output device 314 optionally can be coupled to the data processing system. Examples of input devices may include, but are not limited to, a keyboard, a pointing device such as a mouse, a microphone (e.g. for voice and/or speech recognition), or the like. Examples of output devices may include, but are not limited to, a monitor or a display, speakers, or the like. Input and/or output devices may be coupled to the data processing system either directly or through intervening I/O controllers.

In an embodiment, the input and the output devices may be implemented as a combined input/output device (illustrated in Fig. 15 with a dashed line surrounding the input device 312 and the output device 314). An example of such a combined device is a touch sensitive display, also sometimes referred to as a "touch screen display" or simply "touch screen". In such an embodiment, input to the device may be provided by a movement of a physical object, such as e.g. a stylus or a finger of a user, on or near the touch screen display.

A network adapter 316 may also be coupled to the data processing system to enable it to become coupled to other systems, computer systems, remote network devices, and/or remote storage devices through intervening private or public networks. The network adapter may comprise a data receiver for receiving data that is transmitted by said systems, devices and/or networks to the data processing system 300, and a data transmitter for transmitting data from the data processing system 300 to said systems, devices and/or networks. Modems, cable modems, and Ethernet cards are examples of different types of network adapter that may be used with the data processing system 300.

As pictured in Fig. 15, the memory elements 304 may store an application 318. In various embodiments, the application 318 may be stored in the local memory 308, the one or more bulk storage devices 310, or separate from the local memory and the bulk storage devices. It should be appreciated that the data processing system 300 may further execute an operating system (not shown in Fig. 15) that can facilitate execution of the application 318. The application 318, being implemented in the form of executable program code, can be executed by the data processing system 300, e.g., by the processor 302. Responsive to executing the application, the data processing system 300 may be configured to perform one or more operations or method steps described herein.

Various embodiments of the invention may be implemented as a program product for use with a computer system, where the program(s) of the program product define functions of the embodiments (including the methods described herein). In one embodiment, the program(s) can be contained on a variety of non-transitory computer-readable storage media, where, as used herein, the expression "non-transitory computer readable storage media" comprises all computer-readable media, with the sole exception being a transitory, propagating signal. In another embodiment, the program(s) can be contained on a variety of transitory computer-readable storage media. Illustrative computer-readable storage media include, but are not limited to: (i) non-writable storage media (e.g., read-only memory devices within a computer such as CD-ROM disks readable by a CD-ROM drive, ROM chips or any type of solid-state non-volatile semiconductor memory) on which information is permanently stored; and (ii) writable storage media (e.g., flash memory, floppy disks within a diskette drive or hard-disk drive or any type of solid-state random-access semiconductor memory) on which alterable information is stored. The computer program may be run on the processor 302 described herein.

The terminology used herein is for the purpose of describing particular embodiments only and is not intended to be limiting of the invention. As used herein, the singular forms "a," "an," and "the" are intended to include the plural forms as well, unless the context clearly indicates otherwise. It will be further understood that the terms "comprises" and/or "comprising," when used in this specification, specify the presence of stated features, integers, steps, operations, elements, and/or components, but do not preclude the presence or addition of one or more other features, integers, steps, operations, elements, components, and/or groups thereof.

## Claims

1. A system (1,21) for displaying data associated with at least one device (31,32), said data being displayed next to and/or overlaid on a view of a scene, said scene comprising said at least one device (31,32), said system (1,21) comprising:
at least one input interface (3,23);
at least one output interface (4,24); and
at least one processor (5,25) configured to:
- obtain an image (71-74) captured by a camera of a mobile device (1, 41) via said at least one input interface (3,23), said image (71-74) capturing said scene comprising said at least one device (31,32),
- determine a distance from said camera to the closest device (31) of said at least one device,
- select a device level or a group level based on said distance, and
- display said data by displaying, via said at least one output interface (4,24), data (83) associated with only said closest device (31) if said device level is selected or an aggregation (81,82) of data associated with a group of devices (31-32,31-33) if said group level is selected, said group of devices (31-32,31-33) comprising said closest device (31), wherein said at least one processor (5,25) is configured to select said device level if said distance is determined not to exceed a first distance threshold.

2. A system (1,21) as claimed in claim 1, wherein said at least one processor (5,25) is configured to determine a quantity of devices captured in said image and select said group level by default if said distance is determined to exceed said first distance threshold and said quantity is determined to be higher than one.

3. A system (1,21) as claimed in claim 1 or 2, wherein said at least one processor (5,25) is configured to determine a second distance from said camera to the second closest device (32) of said at least one device if at least one further device (32) is captured in said image and select said device level or said group level further based on said second distance.

4. A system (1,21) as claimed in claim 3, wherein said at least one processor (5,25) is configured to calculate a difference between said distance and said second distance and select said device level if said difference is determined to exceed a difference threshold.

5. A system (1,21) as claimed in claim 3 or 4, wherein said at least one processor (5,25) is configured to select said group level if said distance and second distance are determined to exceed said first distance threshold and not exceed a second distance threshold, said group further comprising said second closest device.

6. A system (1,21) as claimed in claim 5, wherein said at least one processor (5,25) is configured to determine whether said closest device (31) forms a group with at least one other device (33,34) not captured in said image and select said group level if said distance is determined to exceed said first distance threshold and said second distance is determined to exceed said second distance threshold or no further device than said closest device is captured in said image, and said closest device (31) is determined to form said group with said at least one other device (33,34), said group further comprising said at least one other device (33,34).

7. A system (1,21) as claimed in any one of claim 1 to 5, wherein said at least one processor (5,25) is configured to determine whether said closest device (31) forms a group with at least one other device (33,34) not captured in said image and select said group level if said distance is determined to exceed a third distance threshold and said closest device (31) is determined to form said group with said at least one other device (33,34), said group further comprising said at least one other device (33,34).

8. A system (1,21) as claimed in claim 7, wherein said at least one processor (5,25) is configured to select said device level or said group level further based on a user preference if said distance is determined to exceed said third distance threshold, no further device than said closest device is determined to be captured in said image, and said closest device (31) is determined to form said group with said at least one other device (33,34).

9. A system (1,21) as claimed in any one of claims 6 to 8, wherein said at least one other device (34) has a same type as said closest device (31).

10. A system (1,21) as claimed in any one of claims 6 to 8, wherein said at least one other device (33) is located in the same space as said closest device (31).

11. A system (1,21) as claimed in any one of the preceding claims, wherein said closest device (31) is a lighting device.

12. A system (1,21) as claimed in any one of the preceding claims, wherein said at least one processor (5,25) is configured to identify said closest device (31) by obtaining an identifier communicated by said closest device (31) via modulated light communication and obtain said data based on said identifier.

13. A computer-implemented method of displaying data associated with at least one device, said data being displayed next to and/or overlaid on a view of a scene, said scene comprising said at least one device, said method comprising:
- obtaining (101) an image captured by a camera of a mobile device, said image capturing said scene and said at least one device;
- determining (103) a distance from said camera to the closest device of said at least one device;
- selecting (105) a device level or a group level based on said distance, if said distance is determined not to exceed a first distance threshold; and
- displaying (119) said data by displaying data associated with only said closest device if said device level is selected or an aggregation of data associated with a group of devices if said group level is selected, said group of devices comprising said closest device.

14. A computer program product comprising computer program code to perform the method of claim 13 when the computer program product is run on the system of claim 1.

## Patentansprüche

1. System (1,21) zum Anzeigen von Daten, die mindestens einer Vorrichtung (31,32) zugeordnet sind, wobei die Daten neben und/oder überlagert auf einer Ansicht einer Szene angezeigt werden, die Szene umfassend die mindestens eine Vorrichtung (31,32), das System (1,21) umfassend:
mindestens eine Eingabeschnittstelle (3,23);
mindestens eine Ausgabeschnittstelle (4,24); und
mindestens einen Prozessor (5,25), der konfiguriert ist zum:
- Erhalten eines Bilds (71-74), das durch eine Kamera einer mobilen Vorrichtung (1, 41) aufgenommen wird, über die mindestens eine Eingabeschnittstelle (3,23), wobei das Bild (71-74) die Szene aufnimmt, umfassend die mindestens eine Vorrichtung (31,32),
- Bestimmen einer Entfernung von der Kamera zu der nächstgelegenen Vorrichtung (31) der mindestens einen Vorrichtung,
- Auswählen einer Vorrichtungsebene oder einer Gruppenebene basierend auf der Entfernung und
- Anzeigen der Daten durch das Anzeigen, über die mindestens eine Ausgabeschnittstelle (4,24), von Daten (83), die nur der nächstgelegenen Vorrichtung (31) zugeordnet sind, falls die Vorrichtungsebene ausgewählt ist, oder einer Ansammlung (81,82) von Daten, die einer Gruppe von Vorrichtungen (31-32,31-33) zugeordnet sind, falls die Gruppenebene ausgewählt ist, die Gruppe von Vorrichtung (31-32,31-33) umfassend die nächstgelegene Vorrichtung (31), wobei der mindestens eine Prozessor (5,25) konfiguriert ist, um die Vorrichtungsebene auszuwählen, falls bestimmt wird, dass die Entfernung einen ersten Entfernungsschwellenwert nicht überschreitet.

2. System (1,21) nach Anspruch 1, wobei der mindestens eine Prozessor (5,25) konfiguriert ist, um eine Anzahl von Vorrichtungen zu bestimmen, die in dem Bild aufgenommen sind, und die Gruppenebene standardmäßig auszuwählen, falls bestimmt wird, dass die Entfernung den ersten Entfernungsschwellenwert überschreitet und bestimmt wird, dass die Anzahl größer als eins ist.

3. System (1,21) nach Anspruch 1 oder 2, wobei der mindestens eine Prozessor (5,25) konfiguriert ist, um eine zweite Entfernung von der Kamera zu der zweitnächsten Vorrichtung (32) der mindestens einen Vorrichtung zu bestimmen, falls mindestens eine weitere Vorrichtung (32) in dem Bild aufgenommen wird, und die Vorrichtungsebene oder die Gruppenebene ferner basierend auf der zweiten Entfernung auszuwählen.

4. System (1,21) nach Anspruch 3, wobei der mindestens eine Prozessor (5,25) konfiguriert ist, um eine Differenz zwischen der Entfernung und der zweiten Entfernung zu berechnen und die Vorrichtungsebene auszuwählen, falls bestimmt wird, dass die Differenz einen Differenzschwellenwert überschreitet.

5. System (1,21) nach Anspruch 3 oder 4, wobei der mindestens eine Prozessor (5,25) konfiguriert ist, um die Gruppenebene auszuwählen, falls bestimmt wird, dass die Entfernung und die zweite Entfernung den ersten Entfernungsschwellenwert überschreiten und einen zweiten Entfernungsschwellenwert nicht überschreiten, die Gruppe ferner umfassend die zweitnächste Vorrichtung.

6. System (1,21) nach Anspruch 5, wobei der mindestens eine Prozessor (5,25) konfiguriert ist, um zu bestimmen, ob die nächstgelegene Vorrichtung (31) eine Gruppe mit mindestens einer anderen Vorrichtung (33,34) ausbildet, die nicht in dem Bild aufgenommen ist, und die Gruppenebene auszuwählen, falls bestimmt wird, dass die Entfernung den ersten Entfernungsschwellenwert überschreitet und bestimmt wird, dass die zweite Entfernung den zweiten Entfernungsschwellenwert überschreitet oder keine weitere Vorrichtung als die nächstgelegene Vorrichtung in dem Bild aufgenommen ist, und bestimmt wird, dass die nächstgelegene Vorrichtung (31) die Gruppe mit der mindestens einen anderen Vorrichtung (33,34) ausbildet, die Gruppe ferner umfassend die mindestens eine andere Vorrichtung (33,34).

7. System (1,21) nach einem der Ansprüche 1 bis 5, wobei der mindestens eine Prozessor (5,25) konfiguriert ist, um zu bestimmen, ob die nächstgelegene Vorrichtung (31) eine Gruppe mit mindestens einer anderen Vorrichtung (33,34) ausbildet, die nicht in dem Bild aufgenommen ist, und die Gruppenebene auszuwählen, falls bestimmt wird, dass die Entfernung einen dritten Entfernungsschwellenwert überschreitet und bestimmt wird, dass die nächstgelegene Vorrichtung (31) die Gruppe mit der mindestens einen anderen Vorrichtung (33,34) ausbildet, die Gruppe ferner umfassend die mindestens eine andere Vorrichtung (33,34).

8. System (1,21) nach Anspruch 7, wobei der mindestens eine Prozessor (5,25) konfiguriert ist, um die Vorrichtungsebene oder die Gruppenebene ferner basierend auf einer Benutzerpräferenz auszuwählen, falls bestimmt wird, dass die Entfernung den dritten Entfernungsschwellenwert überschreitet, bestimmt wird, dass keine weitere Vorrichtung als die nächstgelegene Vorrichtung in dem Bild aufgenommen wird, und bestimmt wird, dass die nächstgelegene Vorrichtung (31) die Gruppe mit der mindestens einen anderen Vorrichtung (33,34) ausbildet.

9. System (1,21) nach einem der Ansprüche 6 bis 8, wobei die mindestens eine andere Vorrichtung (34) einen gleichen Typ wie die nächstgelegene Vorrichtung (31) aufweist.

10. System (1,21) nach einem der Ansprüche 6 bis 8, wobei sich die mindestens eine andere Vorrichtung (33) in dem selben Raum wie die nächstgelegene Vorrichtung (31) befindet.

11. System (1,21) nach einem der vorstehenden Ansprüche, wobei die nächstgelegene Vorrichtung (31) eine Beleuchtungsvorrichtung ist.

12. System (1,21) nach einem der vorstehenden Ansprüche, wobei der mindestens eine Prozessor (5,25) konfiguriert ist, um die nächstgelegene Vorrichtung (31) durch ein Erhalten einer Kennung zu identifizieren, die durch die nächstgelegenen Vorrichtung (31) über modulierte Lichtkommunikation kommuniziert wird, und die Daten basierend auf der der Kennung zu erhalten.

13. Computerimplementiertes Verfahren zum Anzeigen von Daten, die mindestens einer Vorrichtung zugeordnet sind, wobei die Daten neben und/oder überlagert auf einer Ansicht einer Szene angezeigt werden, die Szene umfassend die mindestens eine Vorrichtung, das Verfahren umfassend:
- Erhalten (101) eines Bilds, das durch eine Kamera einer mobilen Vorrichtung aufgenommen wird, wobei das Bild die Szene und die mindestens eine Vorrichtung aufnimmt;
- Bestimmen (103) einer Entfernung von der Kamera zu der nächstgelegenen Vorrichtung der mindestens einen Vorrichtung;
- Auswählen (105) einer Vorrichtungsebene oder einer Gruppenebene basierend auf der Entfernung, falls bestimmt wird, dass die Entfernung einen ersten Entfernungsschwellenwert nicht überschreitet; und
- Anzeigen (119) der Daten durch das Anzeigen von Daten, die nur der nächstgelegenen Vorrichtung zugeordnet sind, falls die Vorrichtungsebene ausgewählt ist, oder einer Ansammlung von Daten, die einer Gruppe von Vorrichtungen zugeordnet sind, falls die Gruppenebene ausgewählt ist, die Gruppe von Vorrichtungen umfassend die nächstgelegene Vorrichtung.

14. Computerprogrammprodukt, umfassend Computerprogrammcode, um das Verfahren nach Anspruch 13 durchzuführen, wenn das Computerprogrammprodukt auf dem System nach Anspruch 1 ausgeführt wird.

## Revendications

1. Système (1,21) permettant d'afficher des données associées à au moins un dispositif (31,32), lesdites données étant affichées à côté et/ou superposées à une vue d'une scène, ladite scène comprenant ledit au moins un dispositif (31,32), ledit système (1,21) comprenant :
au moins une interface d'entrée (3, 23) ;
au moins une interface de sortie (4, 24) ; et
au moins un processeur (5, 25) configuré pour :
- obtenir une image (71-74) capturée par un appareil photo d'un dispositif mobile (1, 41) par l'intermédiaire de ladite au moins une interface d'entrée (3, 23), ladite image (71-74) capturant ladite scène comprenant ledit au moins un dispositif (31, 32),
- déterminer une distance entre ledit appareil photo et le dispositif le plus proche (31) dudit au moins un dispositif,
- sélectionner un niveau de dispositif ou un niveau de groupe en fonction de ladite distance, et
- afficher lesdites données en affichant, par l'intermédiaire de ladite au moins une interface de sortie (4,24), des données (83) associées uniquement au dispositif le plus proche (31) si ledit niveau de dispositif est sélectionné ou une agrégation (81,82) de données associées à un groupe de dispositifs (31-32,31-33) si ledit niveau de groupe est sélectionné, ledit groupe de dispositifs (31-32,31-33) comprenant ledit dispositif le plus proche (31), dans lequel ledit au moins un processeur (5,25) est configuré pour sélectionner ledit niveau de dispositif s'il est déterminé que ladite distance n'excède pas un premier seuil de distance.

2. Système (1,21) selon la revendication 1, dans lequel ledit au moins un processeur (5,25) est configuré pour déterminer une quantité de dispositifs capturés dans ladite image et sélectionner ledit niveau de groupe par défaut si ladite distance est déterminée comme dépassant ledit premier seuil de distance et que ladite quantité est déterminée comme étant supérieure à un.

3. Système (1,21) selon la revendication 1 ou 2, dans lequel ledit au moins un processeur (5,25) est configuré pour déterminer une seconde distance entre ledit appareil photo et le second dispositif le plus proche (32) dudit au moins un dispositif si au moins un autre dispositif (32) est capturé dans ladite image et pour sélectionner ledit niveau de dispositif ou ledit niveau de groupe en outre en fonction de ladite seconde distance.

4. Système (1,21) selon la revendication 3, dans lequel ledit au moins un processeur (5,25) est configuré pour calculer une différence entre ladite distance et ladite seconde distance et sélectionner ledit niveau de dispositif si ladite différence est déterminée comme dépassant un seuil de différence.

5. Système (1,21) selon la revendication 3 ou 4, dans lequel ledit au moins un processeur (5,25) est configuré pour sélectionner ledit niveau de groupe si ladite distance et la seconde distance sont déterminées comme dépassant ledit premier seuil de distance et ne dépassant pas un deuxième seuil de distance, ledit groupe comprenant en outre ledit second dispositif le plus proche.

6. Système (1,21) selon la revendication 5, dans lequel ledit au moins un processeur (5,25) est configuré pour déterminer si ledit dispositif le plus proche (31) forme un groupe avec au moins un autre dispositif (33,34) non capturé dans ladite image et sélectionner ledit niveau de groupe si ladite distance est déterminée comme dépassant ledit premier seuil de distance et ladite seconde distance est déterminée comme dépassant ledit deuxième seuil de distance ou si aucun autre dispositif que ledit dispositif le plus proche n'est capturé dans ladite image, et si ledit dispositif le plus proche (31) est déterminé comme formant ledit groupe avec ledit au moins un autre dispositif (33, 34), ledit groupe comprenant en outre ledit au moins un autre dispositif (33, 34).

7. Système (1,21) selon l'une quelconque des revendications 1 à 5, dans lequel ledit au moins un processeur (5,25) est configuré pour déterminer si ledit dispositif le plus proche (31) forme un groupe avec au moins un autre dispositif (33,34) non capturé dans ladite image et sélectionner ledit niveau de groupe si ladite distance est déterminée comme dépassant un troisième seuil de distance et si ledit dispositif le plus proche (31) est déterminé comme formant ledit groupe avec ledit au moins un autre dispositif (33,34), ledit groupe comprenant en outre ledit au moins un autre dispositif (33,34).

8. Système (1,21) selon la revendication 7, dans lequel ledit au moins un processeur (5,25) est configuré pour sélectionner ledit niveau de dispositif ou ledit niveau de groupe en outre en fonction d'une préférence d'un utilisateur si ladite distance est déterminée comme dépassant ledit troisième seuil de distance, qu'aucun autre dispositif que ledit dispositif le plus proche n'est déterminé comme étant capturé dans ladite image, et que ledit dispositif le plus proche (31) est déterminé comme formant ledit groupe avec ledit au moins un autre dispositif (33,34).

9. Système (1,21) selon l'une quelconque des revendications 6 à 8, dans lequel ledit au moins un autre dispositif (34) est du même type que le dispositif le plus proche (31).

10. Système (1,21) selon l'une quelconque des revendications 6 à 8, dans lequel ledit au moins un autre dispositif (33) est situé dans le même espace que ledit dispositif le plus proche (31).

11. Système (1,21) selon l'une quelconque des revendications précédentes, dans lequel ledit dispositif le plus proche (31) est un dispositif d'éclairage.

12. Système (1,21) selon l'une quelconque des revendications précédentes, dans lequel ledit au moins un processeur (5,25) est configuré pour identifier ledit dispositif le plus proche (31) en obtenant un identifiant communiqué par ledit dispositif le plus proche (31) par l'intermédiaire d'une communication par lumière modulée et pour obtenir lesdites données en fonction dudit identifiant.

13. Procédé mise en œuvre par ordinateur permettant d'afficher des données associées à au moins un dispositif, lesdites données étant affichées à côté et/ou superposées à une vue d'une scène, ladite scène comprenant ledit au moins un dispositif, ledit procédé comprenant :
- l'obtention (101) d'une image capturée par un appareil photo d'un dispositif mobile, ladite image capturant ladite scène et ledit au moins un dispositif ;
- la détermination (103) d'une distance entre ledit appareil photo et le dispositif le plus proche dudit au moins un dispositif ;
- la sélection (105) d'un niveau de dispositif ou d'un niveau de groupe en fonction de ladite distance, s'il est déterminé que ladite distance ne dépasse pas un premier seuil de distance ; et
- l'affichage (119) desdites données en affichant les données associées uniquement audit dispositif le plus proche si le niveau dudit dispositif est sélectionné ou une agrégation de données associées à un groupe de dispositifs si ledit niveau du groupe est sélectionné, ledit groupe de dispositifs comprenant ledit dispositif le plus proche.

14. Produit de programme informatique comprenant un code de programme d'ordinateur permettant d'exécuter le procédé selon la revendication 13 lorsque le produit de programme d'ordinateur est exécuté sur le système selon la revendication 1.
